# EUROPEAN PATENT APPLICATION

(11) **EP 4 345 666 A1**
(43) Date of publication of application: **03.04.2024**
(21) Application number: 23201081.9
(22) Date of filing: 29.09.2023
(51) Int. Cl.: G06F 21/55, G06N 20/00, H04L 9/40

(54) **ANOMALY DETECTION USING HASH SIGNATURE GENERATION FOR MODEL-BASED SCORING**

(30) Priority: 30.09.2022 US 202217937254
(71) Applicant: BMC Software, Inc., Houston, Texas 77042 (US)
(72) Inventor: SLINGER, Nigel, Houston, 77042 (US); NGUYEN, Vincent Huynh, Houston, 77042 (US); KALLMAN, Roxanne, Houston, 77042 (US); ZHU, Wenjie, Houston, 77042 (US)
(74) Representative: Zahn, Matthias

(57) **Abstract**

Described systems and techniques provide fast, efficient, and cost-effective techniques for detecting anomalous behaviors of monitored objects. Multiple hashing algorithms, each providing multiple hash bins, may be used to generate a unique hash signature for each of the monitored objects. Metric values characterizing the behavior of the monitored objects may be aggregated within individual ones of the multiple hash bins of each of the multiple hashing algorithms. Then, one or more machine learning models may be trained using the unique hash signatures and their included, aggregated metric values. During subsequent scoring using the trained machine learning model(s), each of the aggregated metric values of each of the hash bins may be scored, and a single or small subset of anomalous objects may be identified.

## Description

### Technical Field

This description relates to anomaly detection.

### Background

Many companies and other entities have extensive technology landscapes that include numerous Information Technology (IT) assets, including hardware and software. It is often required for such assets to perform at high levels of speed and reliability, while still operating in an efficient manner. For example, various types of computer systems are used by many entities to execute mission critical applications and high volumes of data processing, across many different workstations and peripherals.

Various types of system monitoring methods are used to detect, predict, prevent, mitigate, or cure system faults that might otherwise disrupt or prevent monitored IT assets from achieving system goals. For example, it is possible to monitor various types of performance metrics characterizing aspects of system performance. For example, when monitored values of the detected performance metrics are scored as being outside of a predetermined range, the monitored values may be considered potentially indicative of a current or future system malfunction, and appropriate action may be taken.

Scoring of performance metrics may be performed using machine learning models that are trained using historical data of the performance or operation of IT assets in a system. Such historical data may be used to discern long-term patterns and characteristics that enable accurate assessments of current performance levels and predictions of future performance levels.

However, training and implementing such machine learning models may be inefficient and costly. For example, when attempting to score values across a sequence of objects, conventional techniques may be required to train and score for each object individually. Such approaches may therefore consume significant resources and require unacceptable periods of time to train and implement the machine learning models, particularly when, for example, not all of the sequence of objects are present (e.g., only non-sequential subsets of the sequence of objects exist).

### Summary

According to some general aspects, a computer program product may be tangibly embodied on a non-transitory computer-readable storage medium and may include instructions. When executed by at least one computing device, the instructions may be configured to cause the at least one computing device to receive metric values of monitored objects and access a plurality of hash signatures that include a hash signature for each object of the monitored objects, each hash signature including a bin value of a first plurality of bin values producible by a first hashing algorithm and a bin value of a second plurality of bin values producible by a second hashing algorithm. When executed by the at least one computing device, the instructions may be further configured to cause the at least one computing device to score aggregated metric values of each subset of the objects having a corresponding bin value of the first plurality of bin values and aggregated metric values of each subset of the objects having a corresponding bin value of the second plurality of bin values against at least one trained machine learning model to obtain a first plurality of scores and a second plurality of scores. When executed by the at least one computing device, the instructions may be further configured to cause the at least one computing device to identify, from the first plurality of scores, a first subset of the plurality of hash signatures and corresponding subset of the objects having at least one anomalous score, and identify, from the second plurality of scores, a second subset of the plurality of hash signatures and corresponding subset of the objects having at least one anomalous score. When executed by the at least one computing device, the instructions may be further configured to cause the at least one computing device to identify at least one object included in both the first subset and the second subset as an anomalous object.

According to other general aspects, a computer-implemented method may perform the instructions of the computer program product. According to other general aspects, a system may include at least one memory, including instructions, and at least one processor that is operably coupled to the at least one memory and that is arranged and configured to execute instructions that, when executed, cause the at least one processor to perform the instructions of the computer program product and/or the operations of the computer-implemented method.

The details of one or more implementations are set forth in the accompanying drawings and the description below. Other features will be apparent from the description and drawings, and from the claims.

### Brief Description of the Drawings

FIG. 1 is a block diagram of a system for anomaly detection using hash signature generation for model-based scoring.
FIG. 2 is a flowchart illustrating example training operations of the anomaly detection system of FIG. 1.
FIG. 3 is a flowchart illustrating example scoring operations of the anomaly detection system of FIG. 1.
FIG. 4 is a first table illustrating object hash signatures.
FIG. 5 is a second table illustrating object hash signatures filtered from the table of FIG. 4.
FIG. 6 is a third table illustrating object hash signatures filtered from the table of FIG. 5.
FIG. 7 is a fourth table illustrating object hash signatures filtered from the table of FIG. 6.
FIG. 8 is a flowchart illustrating an example model training process for use in the anomaly detection system of FIG. 1, as applied to the object hash signatures of FIGS. 4-7.
FIG. 9 is a flowchart illustrating an example model scoring process for use in the anomaly detection system of FIG. 1, as applied to the object hash signatures of FIGS. 4-7.
FIG. 10 is a flowchart illustrating more detailed aspects of the example model scoring process of FIG. 9.

### Detailed Description

Described systems and techniques provide fast, efficient, and cost-effective techniques for detecting anomalous behaviors of monitored objects. Multiple hashing algorithms, each providing multiple hash bins, may be used to generate a unique hash signature for each of the monitored objects. Metric values characterizing the behavior of the monitored objects may be aggregated within individual ones of the multiple hash bins of each of the multiple hashing algorithms. Then, one or more machine learning models may be trained using the unique hash signatures and their included, aggregated metric values.

As a result, a total quantity of training may be reduced, as compared to training a machine learning model for each of the objects individually. Instead, training may be performed using smaller sets of aggregated metric values, in which an anomalous metric value of a monitored object may be included with non-anomalous metric values of other monitored object(s).

During subsequent scoring using the trained machine learning model(s), each of the aggregated metric values of each of the hash bins may be scored. Then, for each hashing algorithm, objects with aggregated metric values that do not contain any anomalous metric values (e.g., that contain only non-anomalous metric values within an expected range(s)) may be removed. For example, if three hashing algorithms are used, a triangulation may be performed in which a first iteration for a first hashing algorithm filters or removes a first subset of objects determined to have only non-anomalous values, leaving a first filtered subset of objects that may contain anomalous values. A second iteration for a second hashing algorithm may filter the first filtered set of objects to remove a second subset of objects determined to have only non-anomalous values, leaving a second filtered set of objects that may contain anomalous values. Finally, a third iteration for a third hashing algorithm may filter the second filtered set of objects to remove a third subset of objects determined to have only non-anomalous values, leaving a third filtered set of objects that may contain anomalous values.

In many cases, the third filtered set of objects may contain only a single object, which may therefore be identified as having anomalous metric value(s). In other cases, the third filtered set of objects may include a small set of objects, and additional steps may be taken to infer or otherwise determine which object(s) of the final set of objects includes an anomalous metric value(s).

Described techniques may be applied to virtually any component or other resource of an IT landscape, as well as to any other set of objects to be monitored for anomalous behaviors. Therefore, the term object should be broadly understood to refer to any person or thing that may exhibit expected behavior in an environment or other context, and that may therefore exhibit behavior that is anomalous with respect to the expected behavior.

As described in detail, below, described techniques are useful for scenarios in which some unknown, undetermined objects within a set of objects are expected to be associated with metric values that are set to zero or otherwise expected to rarely or never exhibit anomalous behaviors. For example, a set of objects may be defined for monitoring, but in particular contexts, some unknown subset of the set of objects may be set to zero (e.g., may not be in use).

In such scenarios, when the subset of objects is unknown, conventional systems typically must provide training and scoring for each object of the set of objects, including the objects in the subset of objects, in order to ensure that the systems are inclusive of all possible anomalies. However, such approaches, while inclusive, are inefficient and wasteful because they are required to provide processing that is not actually required.

In contrast, described techniques provide training for sets of objects (and associated metric values), while retaining an ability to identify a small number or single one of the objects exhibiting anomalous behavior. Consequently, the quantity of training required is reduced, and scoring may be performed more efficiently, as well.

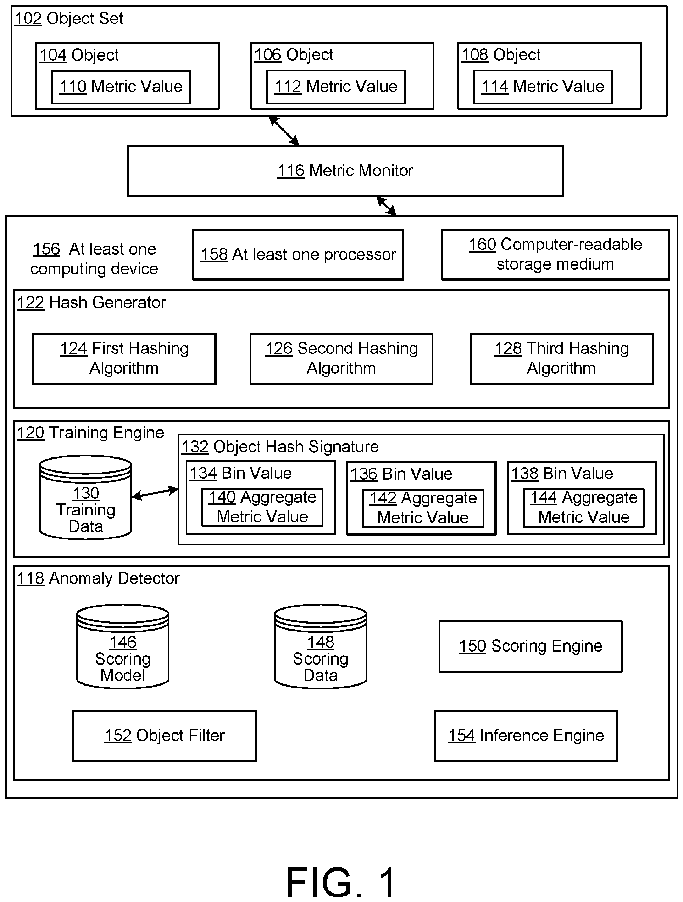

FIG. 1 is a block diagram of a system for anomaly detection using hash signature generation for model-based scoring. In the example of FIG. 1, an object set 102 includes an object 104, an object 106, and an object 108. As further illustrated, the object set 102 may be associated with one or more performance or other metric values, so that the object 104 is illustrated in FIG. 1 as being associated with a metric value 110, while the object 106 is illustrated as being associated with a metric value 112, and the object 108 is illustrated as being associated with a metric value 114. A metric monitor 116 may be configured to monitor the various metric values of the object set 102.

As noted above, the objects 104, 106, 108 represent a plurality or set of objects of any number that may be monitored and evaluated for anomalous behavior by an anomaly detector 118. As also referenced, the anomaly detector 118 may be configured to execute model-based scoring that is based on training operations of a training engine 120, where the training engine 120 conducts model training based on hashing operations of a hash generator 122.

In more detail, the objects 104, 106, 108 may be any hardware or software components of a technology landscape that may include any computing environment of an enterprise or organization conducting network-based IT transactions. Such a technology landscape may include many types of network environments, such as network administration of a private network of an enterprise, or a mainframe computing environment. Objects 104, 106, 108 may also represent scenarios in which sensors, such as internet of things devices (IoT), are used to monitor environmental conditions and report on corresponding status information (e.g., with respect to patients in a healthcare setting, working conditions of vehicles, manufacturing equipment, or other types of machinery in many other industrial settings (including the oil, gas, or energy industry), or working conditions of banking equipment, such as automated transaction machines (ATMs)).

More generally, the monitored objects 104, 106, 108 may include virtually any entity that performs any associated behavior that is expected to conform to an expected norm over a period of time, and that may therefore be able to be characterized as exhibiting anomalous behavior when the expected norm is violated in some manner and/or to some extent. For example, the objects 104, 106, 108 could include business entities and/or individual persons performing activities in manufacturing, energy, sales, shopping, financial, or healthcare environments. In a specific example, the objects 104, 106, 108 may include stores in a shopping mall, and the metric values 110, 112, 114 may represent or relate to normal or expected foot traffic in each store, total volume of sales in each store, or any other metric characterizing operations of each store. Various other specific examples are provided below or would be apparent.

In the simplified example of FIG. 1, the set of objects 104, 106, 108 is illustrated as including three objects, but in example implementations, a maximum number of objects that may be trained by the training engine 120 and scored by the anomaly detector 118 may be dictated by the hash generator 122. More specifically, a maximum number of objects that may be uniquely identified and scored using the hash generator 122 may be dependent upon a number of hashing algorithms used by the hash generator 122, illustrated in the example of FIG. 1 as first hashing algorithm 124, second hashing algorithm 126, and third hashing algorithm 128.

In general, a hashing algorithm may refer to any function designed to map data of arbitrary size to data of fixed size (e.g., mapping any number to one of a pre-defined set of numbers). In the context of FIG. 1, hashing algorithms 124, 126, 128 refer to algorithms that are each designed to map each of the objects 104, 106, 108 to one of a specified number of values, which may be referred to as bins, buckets, layers, or levels. As described in detail, below, a number and type of hashing algorithms chosen may be selected to match a number of objects in the object set 102.

For example, the first hashing algorithm 124 may be a 3-level hashing algorithm that maps numbers to one of three values, such as 0, 1, or 2. Therefore, the object 104 may be mapped to the value 0, the object 106 may be mapped to the value 1, and the object 108 may be mapped to the value 2. Of course, the values could be defined as 1, 2, or 3, or any other suitable value range.

The second hashing algorithm 126 may be a 7-level hashing algorithm that maps numbers to one of seven values, such as 0, 1, 2, 3, 4, 5, or 6. To give specific examples, the object 104 may be mapped to the value 3, the object 106 may be mapped to the value 4, and the object 108 may be mapped to the value 5. Similarly, the third hashing algorithm 128 may be an 11-level hashing algorithm that maps numbers to one of eleven values, such as 0, 1, 2, 3, 4, 5, 6, 7, 8, 9, or 10. Again just for the purpose of giving specific examples, the object 104 may be mapped to the value 2, the object 106 may be mapped to the value 4, and the object 108 may be mapped to the value 9.

Consequently, the hash generator 122 is capable of accumulating training data 130 of the training engine 120, in which each object 104, 106, 108 may be provided with a unique object hash signature 132 that includes a combined set of outputs of the hashing algorithms 124, 126, 128, represented in FIG. 1 as bin value 134, bin value 136, and bin value 138. For example, and continuing the preceding examples, the object 104 may be provided with a hash signature of: 0 (i.e., its bin value 134 from the 3-level hashing algorithm 124), 3 (i.e., its bin value 136 from the 7-level hashing algorithm 126), and 2 (i.e., its bin value 138 from the 11-level hashing algorithm 128), or [0, 3, 2]. Similarly, the object 106 may be provided with a unique object hash signature 132 of: 1 (in the bin value 134), 4 (in the bin value 136), and 4 (in the bin value 138), or [1, 4, 4]. In the same way, the object 108 may be assigned object hash signature [2, 5, 9].

As the number of objects will typically be larger than the three objects 104, 106, 108 of the simplified example of FIG. 1, it is apparent that two or more objects in the object set 102 may be assigned the same hash bin value, for any given hashing algorithm. For example, if the first hashing algorithm 124 is a 3-level hashing algorithm, then any fourth or subsequent object beyond the object 108 would be assigned one of the already-assigned levels of 0, 1, or 2. Nonetheless, the combined sequence of bin values 134, 136, 138 will provide a unique object hash signature 132 for each object, as long as the total number of objects remains within a maximum that corresponds to the chosen hashing algorithms.

For example, in the preceding examples using 3-level, 7-level, and 11-level hashes, a total number of objects and associated unique signatures of 3x7x11 = 231 objects may be generated. In another example, using 3-level, 7-level, and 13-level hashes, a total number of objects and associated unique signatures of 3x7x13 = 273 objects may be generated. The technique may be extended, e.g., by using four or more hashing algorithms of corresponding prime numbers and associated levels, such as by using 3-level, 7-level, 11-level, and 13-level hashes for a total number of objects and associated unique signatures of 3x7x11x13 = 3003 objects.

As further illustrated in FIG. 1, each bin value 134, 136, 138 of the object hash signature 132 may include corresponding aggregated metric values 140, 142, 144. For example, for the object 104, the bin value 134 may be 0, as in the example above. As also noted above, a fourth or subsequent object (not shown in FIG. 1) may also be assigned the same bin value of 0 by the first hashing algorithm 124. Then, the aggregate metric value 140 may represent a combination (e.g., summation) of the metric value of the object 104 and the metric value of the fourth object.

More generally, within the maximum number of objects of the object set, any object assigned the bin value 134 of 0, 1, or 2 by the first hashing algorithm 124 will be associated with an aggregation of all metric values recorded (within a relevant time period) for such objects. Similarly, objects assigned a particular bin value 136 of 0, 1, 2, 3, 4, 5, or 6 by the second hashing algorithm 126 will contain an aggregation of all metric values recorded (within a relevant time period) for such objects. And, objects assigned a particular bin value 138 of 0, 1, 2, 3, 4, 5, 6, 7, 8, 9, or 10 by the third hashing algorithm 128 will contain an aggregation of all metric values recorded (within a relevant time period) for such objects.

As a result, it is not necessary to store or track individual metric values of individual objects, nor is it necessary to train using individual metric values of individual objects. Instead, aggregated metric values are tracked, so that a given aggregation of metric values may contain both normal and abnormal (i.e., anomalous) metric values. Consequently, the training engine 120 may perform training on a smaller total quantity of data, and may thereby perform training faster and more efficiently.

Moreover, in some cases, one or more of the objects of the object set 102 may have no metric values within a relevant time frame over which training occurs. For example, one or more of the objects of the object set 102 may not be in use by an owner or operator, or may not be assigned for use at all.

In these and similar cases, the various aggregated metric values 140, 142, 144 will be further reduced from the preceding examples. In particular, training on zero values may be avoided, and training may be performed even more quickly, and more efficiently.

Once training is completed by the training engine 120, a scoring model 146 of the anomaly detector 118 may be fully trained to provide anomaly scoring with respect to accumulated scoring data 148, using a scoring engine 150. For example, the scoring model 146 may represent any suitable machine learning model that may be parametrized using outputs of the training engine 120. Some non-limiting but more specific examples of scoring techniques are provided below, and various other techniques may be used, as well.

In general, the scoring data 148 should be understood to be collected, organized, and stored in a same or similar manner as the training data 130. For example, the same object hash signature 132 of each object may be used, and metric values of objects of the object set 102 may be aggregated within corresponding bin values, as already described in the context of the training data 130. In other words, and consistent with typical approaches to machine learning algorithms, various types of historical data may be used for training purposes, and then current values of the same type of data may be scored using a resulting, trained model.

Thus, in FIG. 1, the scoring data 148 is accumulated as current metric values are received, e.g., each minute or other interval of a relevant timeframe. As an example, the scoring engine 150 may assign a score to the aggregated metric value 140 of the bin value 134 of the first hashing algorithm 124. The assigned score may be within an expected range, e.g., considered to be normal, or may be outside of an expected range, and considered to be abnormal, or anomalous. This process may be repeated for all bin values being used; for example, in the example scenario using 3-level, 7-level, and 11-level hashes, the scoring process is implemented 21 times for the 3+7+11 total possible bin values, resulting (in the example) in 21 scores.

As may be understood from the above description, the score assigned to each bin value will apply to an expectation with respect to an aggregated metric value(s) of the bin value being scored. Such aggregated metric values may contain only normal metric values, or may contain one or more anomalous metric values among multiple normal metric values. Therefore, since a given aggregation of metric values may contain both normal and abnormal (i.e., anomalous) metric values in each bin value of each object hash signature 132 of each object of the object set 102, it is possible to iteratively filter or narrow object subsets of the object set 102 to identify a single (or small set of) object(s) associated with anomalous metric values.

For example, an object filter 152 may be configured to remove or filter, at each successive hash level, aggregated metric values and associated objects that contain only normal metric values. The result of these operations is a reduced subset of objects for each hash level, associated with a reduced subset of bin values, in which at least one anomalous metric value may be included.

For example, the object filter 152 may filter at the 3-level hash of the first hashing algorithm 124, and determine that only objects having a hash bin value of "1" contain anomalous scores, and may therefore filter out objects having hash bin values of "0" and "2" for the 3-level hash of the first hashing algorithm 124. The object filter 152 may then filter at the 7-level hash of the second hashing algorithm 126, and determine that only objects having a hash bin value of "4" contain anomalous scores, and may therefore filter out objects having hash bin values of "0", "1", "2", "3", "5", and "6" for the 7-level hash of the second hashing algorithm 126. The object filter 152 may then filter at the 11-level hash 11 of the third hashing algorithm 128, and determine that only objects having a hash bin value of "9" contain anomalous scores, and may therefore filter out objects having hash bin values of "0", "1", "2", "3", "5", "6", "7", "8", and "10" for the 11-level hash of the third hashing algorithm 128.

Following the above operations, an object having a unique hash signature of [1, 4, 9] is identified as being a single object exhibiting anomalous behavior. That is, the identified object may be understood to have at least one anomalous metric value that appears among various other normal, non-anomalous metric values of other objectswithin each aggregation of such metric values within each and all of the hash bin values of 3-level hash = 1, 7-level hash = 4, and 11-level hash = 9.

In the preceding example, a single object having an anomalous metric value(s) is identified. In some cases, however, there may be two or more objects remaining at the end of a final iteration of the object filter 152. In such cases, as described in more detail, below, an inference engine 154 may be configured to analyze the remaining objects and their metric values to determine which of the remaining object(s) is associated with an anomalous metric value.

In FIG. 1, the anomaly detector 118, the training engine 120, and the hash generator 122 are illustrated as being implemented using at least one computing device 156, including at least one processor 158, and a non-transitory computer-readable storage medium 160. That is, the non-transitory computer-readable storage medium 160 may store instructions that, when executed by the at least one processor 158, cause the at least one computing device 156 to provide the functionalities of the anomaly detector 118, the training engine 120, the hash generator 122, and related functionalities.

For example, the at least one computing device 156 may represent one or more servers. For example, the at least one computing device 156 may be implemented as two or more servers in communications with one another over a network, or two or more virtual machines in communication with one another within a mainframe system. Accordingly, the anomaly detector 118, the training engine 120, and the hash generator 122 may be implemented using separate devices in communication with one another. In other implementations, however, it will be appreciated that some or all of the respective functionalities of the anomaly detector 118, the training engine 120, and the hash generator 122 may be implemented partially or completely in an integrated fashion, e.g., as a single module.

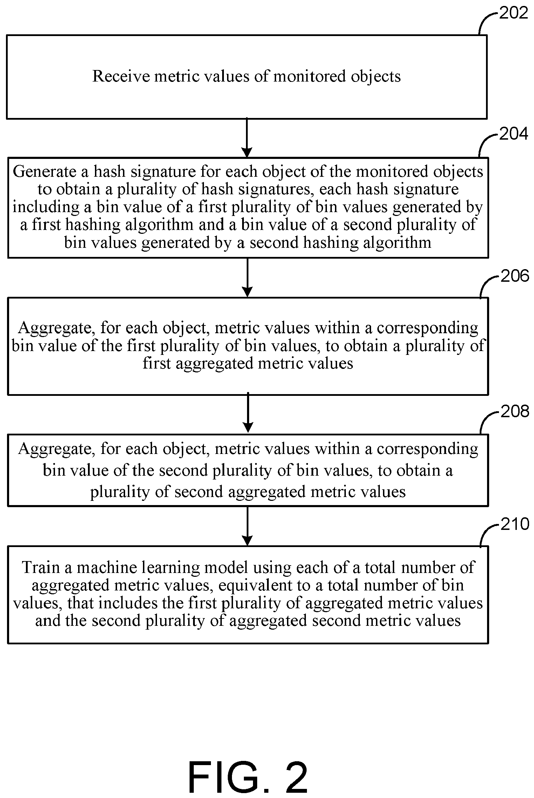

FIG. 2 is a flowchart illustrating example training operations of the anomaly detection system of FIG. 1. In the example of FIG. 2, operations 202 to 210 are illustrated as separate, sequential operations. In various implementations, the operations 202 to 210 may include sub-operations, may be performed in a different order, may include alternative or additional operations, or may omit one or more operations. Further, in all such implementations, included operations may be performed in an iterative, looped, nested, or branched fashion.

In the example of FIG. 2, metric values of monitored objects are received (202). For example, a training period may be defined during which training values are received. In other examples, historical data may be accessed and processed for training purposes.

A hash signature for each object of the monitored objects may be generated to obtain a plurality of hash signatures, each hash signature including a bin value of a first plurality of bin values generated by a first hashing algorithm and a bin value of a second plurality of bin values generated by a second hashing algorithm (204). For example, as described in the context of FIG. 1 and illustrated and described in further detail, below, any two or more of a 3-level hash algorithm, a 7-level hash algorithm, an 11-level hash algorithm, or other suitable hashing algorithm(s) may be used. In the example of 3-level hash, 7-level hash, and 11-level hash algorithms, a first plurality of bin values would include 3 bin values 0, 1, 2, a second plurality of bin values would include 7 bin values 0, 1, 2, 3, 4, 5, 6, and a third plurality of bin values would include 11 bin values 0, 1, 2, 3, 4, 5, 6, 7, 8, 9, and 10, for a total of 21 bin values. Therefore, each object may be assigned a unique hash signature that includes a unique combination of these bin values.

For each object, metric values may be aggregated within a corresponding bin value of the first plurality of bin values, to obtain a plurality of first aggregated metric values for training (206). For example, a first object may have its metric values added to a first bin value of the first hashing algorithm (e.g., to 3-level hash, bin value = 0), and a second object may have its metric values added to the second bin value of the first hashing algorithm (e.g., to 3-level hash, bin value = 1), and so on. Assuming there are more objects than hash levels of the first hashing algorithm, multiple objects will be assigned a single hash bin value of the first hashing algorithm, so that metric values of these multiple objects will be aggregated within each such hash bin value.

Similarly, for each object, metric values may be aggregated within a corresponding bin value of the second plurality of bin values, to obtain a plurality of second aggregated metric values for training (208). For example, a first object may have its metric values added to a second bin value of the second hashing algorithm (e.g., to 7-level hash, bin value = 0), and a second object may have its metric values added to the second bin value of the second hashing algorithm (e.g., to 7-level hash, bin value = 1), and so on. Again, assuming there are more objects than hash levels of the second hashing algorithm, multiple objects will be assigned a single hash bin value of the second hashing algorithm, so that metric values of these multiple objects will be aggregated within each such hash bin value.

Similar processing may be applied to a third hashing algorithm, and, as described, more than three hashing algorithms may be used, as well. Consequently, at the end of a defined training period, each object in a set of objects may be assigned a unique object hash signature in which its metric values are aggregated with metric values of other objects of the set of objects, for each of a plurality of hash bin values that correspond to each of a plurality of hashing algorithms being used for training.

Then, a machine learning model may be trained using each of a total number of aggregated metric values, equivalent to a total number of bin values, that includes the first plurality of aggregated metric values and the second plurality of aggregated second metric values (210). For example, in the examples using 3-level hash, 7-level hash, and 11-level hash algorithms, a total number of aggregations of metric values, e.g., a total number of hash bin values, would be the sum of available hash bin values of 3 + 7 + 11 = 21. That is, in the example, a total number of 21 scores may be generated for training purposes, and a suitable machine learning model may be parameterized and otherwise trained over multiple training rounds to characterize underlying metric values as anomalous or non-anomalous, using such scores.

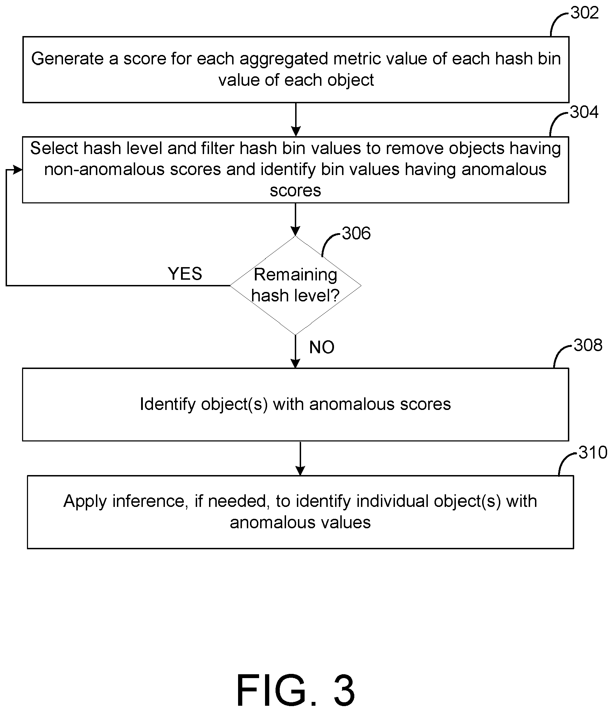

FIG. 3 is a flowchart illustrating example scoring operations of the anomaly detection system of FIG. 1. As with FIG. 2, operations 302 to 310 are illustrated as separate, sequential, iterative operations. As such operations are non-limiting, it will be appreciated that the operations 302 to 310 may include sub-operations, may be performed in a different order, may include alternative or additional operations, or may omit one or more operations, or may otherwise be modified in a suitable manner.

In the example of FIG. 3, a score may be generated for each aggregated metric value of each hash bin value of each object (302). For example, the scoring engine 150 may generate a score for each aggregated metric value of each hash bin value. For example, continuing the example of FIG. 2, when using 3-level hash, 7-level hash, and 11-level hash algorithms, a total number of 21 scores may be generated.

Then, for a selected hash level, hash bin values may be filtered to remove objects having non-anomalous scores and identify bin values having anomalous scores (304). For example, as described herein, the object filter 152 may initially select 3-level hash as the selected hash level, and determine that the hash bin value of 3-level hash, bin value = 1 is associated with an anomalous score, and therefore contains at least one metric value of at least one object that is anomalous (along with various other metric values of other objects that may be anomalous or non-anomalous). The object filter 152 may thus filter and remove all objects that have a bin value of 3-level hash, bin value = 0 and 3-level hash, bin value = 2. That is, such filtered objects may be removed from further scoring operations.

If a further hash level remains (306), then the object filter 152 may select a second hash level. That is, operation 304 may be repeated for the second hash level. For example, the object filter 152 may determine that the hash bin value of 7-level hash, bin value = 4 is associated with an anomalous score, and therefore contains at least one metric value of at least one object that is anomalous (along with various other metric values of other objects that may be anomalous or non-anomalous). The object filter 152 may thus filter and remove all objects that have a bin value of 7-level hash, bin value = 0, 1, 2, 3, 5, or 6. That is, such filtered objects may be removed from the previously-filtered object set with respect to further scoring operations, thereby leaving a further-reduced object set for a subsequent iteration, if any.

Preceding operations may be iteratively repeated for each hashing algorithm/hashing level, until all hashing algorithms/hashing levels have been processed (306). Then, a remaining subset of objects may be understood to have been identified as including at least one object that includes an anomalous score (308).

For example, if a single object remains, then the object may be identified as exhibiting anomalous behavior. If two objects remain, then at least one of the objects may be identified as exhibiting anomalous behavior.

In the latter case, the inference engine 154 may be used to determine which one or more of a remaining set of two or more objects exhibits anomalous behavior, therefore inference, if needed, is applied to identify individual object(s) with anomalous values (310). For example, if two objects remain, then a detailed analysis customized to the context of the two objects and their respective metric values may be performed. Although such analyses may vary widely depending on a nature and type of the objects being analyzed, it may be generally appreciated that performing such analyses on a greatly-reduced subset of objects may be executed in a timely and efficient manner, as compared to training, scoring, and otherwise analyzing objects individually and without benefit of, e.g., the hash-triangulation techniques described herein.

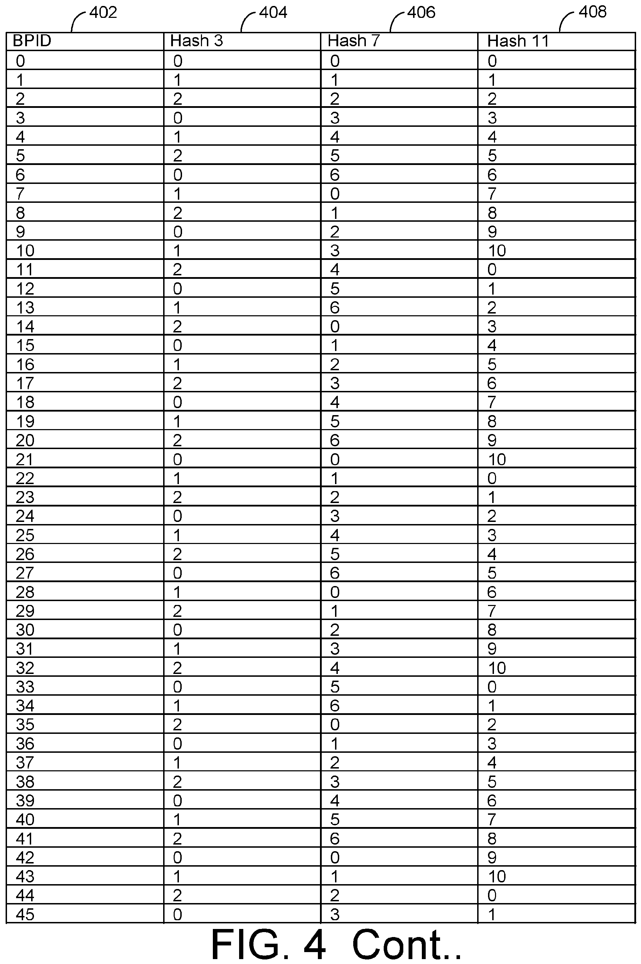

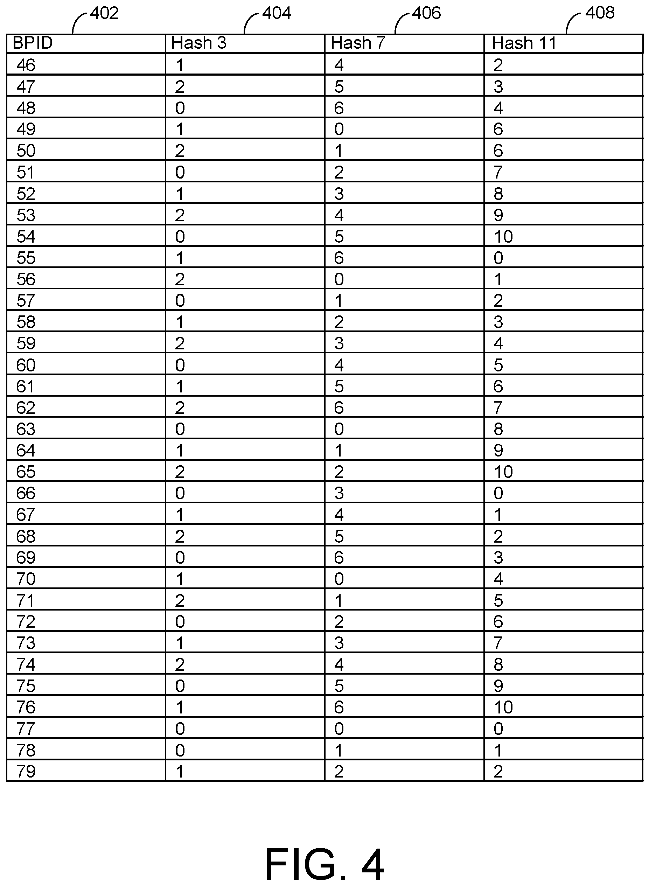

In the following examples of FIGS. 4-10, specific scenarios are provided with respect to use cases related to IT monitoring within a technology landscape. As already noted, such example scenarios are provided for the sake of illustration and explanation, and are not limiting of the various other scenarios in which described techniques may be used.

As also referenced above, various systems within a technology landscape may identify many different types of performance metrics (and associated potential value ranges) for corresponding system assets. Although widely varying in type, a common scoring system across all of the performance metrics may be used for all such performance metrics for ease and consistency of comparison of current operating conditions (e.g., anomalies).

In the following examples, performance metrics may include performance metrics commonly referred to as key performance indicators, or KPls. The term KPI should be understood broadly to represent or include any measurable value that can be used to indicate a past, present, or future condition, or enable an inference of a past, present, or future condition with respect to a measured context (including, e.g., the example contexts referenced below). KPIs may thus represent a real-time or near real-time stream of data that are frequently or constantly being received with respect to underlying system assets. For example, KPls may be considered to be received within defined time windows, such as every second, every minute, or every hour.

KPIs are often selected and defined with respect to an intended goal or objective, such as maintaining an operational status of a network, or providing a desired level of service to a user. For example, KPls may include a percentage of central processing unit (CPU) resources in use at a given time, an amount of memory in use, or data transfer rates or volumes between system components. In a given IT system, the system may have hundreds or even thousands of KPIs that measure a wide range of performance aspects about the system and its operation. Consequently, the various KPIs may, for example, have values that are measured using different scales, ranges, thresholds, and/or units of measurement.

One or more machine learning models may be trained to account for these and other factors and to assign a score to a value or values of a specific KPI or group of KPIs at a given time. Individually or in the aggregate, these scores may be used to provide a performance characterization of a system, a technology landscape, or a portion or portions thereof. Moreover, the scores may be defined with respect to a scale, range, threshold(s), and/or unit of measurement that may be commonly defined across all KPIs. As a result, it is possible to assess and otherwise utilize the resulting individual scores, even for a large number of KPIs.

As described with respect to FIGS. 1-3, however, training machine learning models for individual KPIs may be inefficient and resource-intensive, particularly in contexts in which the KPIs may have zero values (e.g., when an underlying system asset is not being used). Instead, described techniques for training the scoring model 146 of FIG. 1 using aggregations of metric values sorted by corresponding hash bin values may be used.

In so doing, any new or existing technique(s) for training and otherwise implementing the scoring model 146 may be used, including techniques that are the same as, or similar to, techniques used to train machine learning models for individual KPls. That is, the scoring model 146 may be trained and parameterized to score the various aggregations of performance metric values received through the metric monitor 116 to obtain standardized performance characterizations for the various aggregations.

For example, in some scoring systems, threshold values may be set such that scores above or below zero within a first threshold (e.g., from -1.5 to 1.5 in a first approach, or from -3.0 to 3.0 in a second approach) are considered "green," or acceptable; scores outside of the first threshold but within a second threshold (e.g., from -3.0 to -1.5 and from 1.5 to 3.0 in the first approach, or from -6 to -3 and from 3 to 6 in the second approach) are considered "yellow," or cautionary; and scores outside of the second threshold (e.g., less than -3 or more than 3 in the first approach, or less than -6 or more than 6 in the second approach) are considered "red" or anomalous. In similar scoring schemes, other thresholds may be set. For example, an outer ("red") range may be set as less than -3.0 or more than 3.0, or less than -1.5 or more than 1.5.

In additional or alternative scoring schemes, performance metric values may be normalized for scoring between 0 and 100 (or some other minimum or maximum value), where either 0 or 100 may be selected as an optimal value. Then, ranges within the 0 to 100 range may be designated as stable or "green," warning or "yellow," or critical or "red."

These approaches are merely examples, and, as described herein, other scoring values, ranges, and thresholds may be set. Thus, such scores may be understood to provide, for example, a measure of an extent to which a raw aggregate value differs from its modeled mean in terms of standard deviation units. In such examples, the above-referenced scores of ±1.5 represent 1.5 standard deviations from the mean, and the scores of ±3.0 represent 3 standard deviations from the mean. Model sensitivity levels may be set to dictate values of a normal range and the ranges of levels of deviation.

In the following examples of FIGS. 4-10, specific description is provided with respect to bufferpools, which are isolated storage structures in which data may be cached for performance reasons. It is possible to define different amounts of bufferpools, and, in the following examples, it is assumed that a maximum of 80 individual bufferpools may be defined, but that not all 80 bufferpools are required to be defined in any specific context.

Moreover, the bufferpools that are defined need not be sequential. For example, the system of FIG. 1 may be provided to, and implemented by, multiple users across multiple technology landscapes, and each such user may configure implemented bufferpools in a desired manner. For example, only bufferpools 0, 8, and 30 may be defined in a given implementation.

Given that monitoring 80 bufferpools is resource-intensive, and a machine learning environment may have no way to determine which bufferpools are actually defined at any given installation, described techniques may be used to provide optimization to reduce overhead, including advantages of five times or more for systems in which large numbers of objects may be defined.

Moreover, in the simplified examples of FIGS. 1-3, the objects 104, 106, 108 are each described with respect to a single metric and associated stream of values. In practice, however, a single object may have two or more performance metrics. For example, in the case of bufferpools, each bufferpool may be monitored with respect to a read KPI characterizing a number or rate of reads performed, and with respect to a write KPI characterizing a number or rate of writes performed.

Using the examples above in which the hashing algorithms 124, 126, 128 represent 3-level hash, 7-level hash, and 11-level hash algorithms, a bufferpool KPI may be assigned to three hash bins based on its bufferpool identification (ID), or sequence number. As described, this approach reduces a number of KPls to be monitored from 80 to 21 (3+7+11), while enabling the ability to identify a specific bufferpool(s) that contains an anomalous score. When monitoring more than one KPI per bufferpool (e.g., a read KPI and a write KPI), the savings are increased. For example, monitoring 3 KPIs per bufferpool using described techniques would reduce the number of KPIs for which training is performed from 240 (3x80) to 63 (3x21).

In the example of FIG. 4, column 402 includes individual bufferpool IDs for 80 bufferpools 0-79, corresponding to the object hash signature 132 of FIG. 1. Column 404 illustrates a hash bin value generated by the first hashing algorithm 124, illustrated in the example as Hash-3, and corresponding to the bin value 134 in FIG. 1. Column 406 illustrates a hash bin value generated by the second hashing algorithm 126, illustrated in the example as Hash-7, and corresponding to the bin value 136 in FIG. 1. Column 408 illustrates a hash bin value generated by the third hashing algorithm 128, illustrated in the example as Hash-11, and corresponding to the bin value 138 in FIG. 1.

As already described, by using three hashing algorithms, a maximum of 231 objects may be monitored, without regard for which of the objects actually have current metric values, and only training 21 total (aggregated) values. When the aggregated metric values are checked for anomalies, the unique hash signature of each object may be used to isolate each bufferpool identifier (i.e., each row of the table of FIG. 4).

In the following examples, as referenced above, each bufferpool may be monitored with respect to two KPls: the number of reads and the number of writes. Each KPI may be assigned its own set of 21 hash bins or hash bin values. Therefore, a number of reads for each bufferpool may be accumulated in appropriate hash bins, and the number of writes may also be accumulated in the appropriate hash bins.

If a bufferpool is not defined or not in use, the KPI value need not be tracked (e.g., may be ignored). In such cases, if a KPI value does come into use, described techniques will not be disrupted, because an underlying bufferpool is not required to be tracked; instead, as described, hash-based tracking is used.

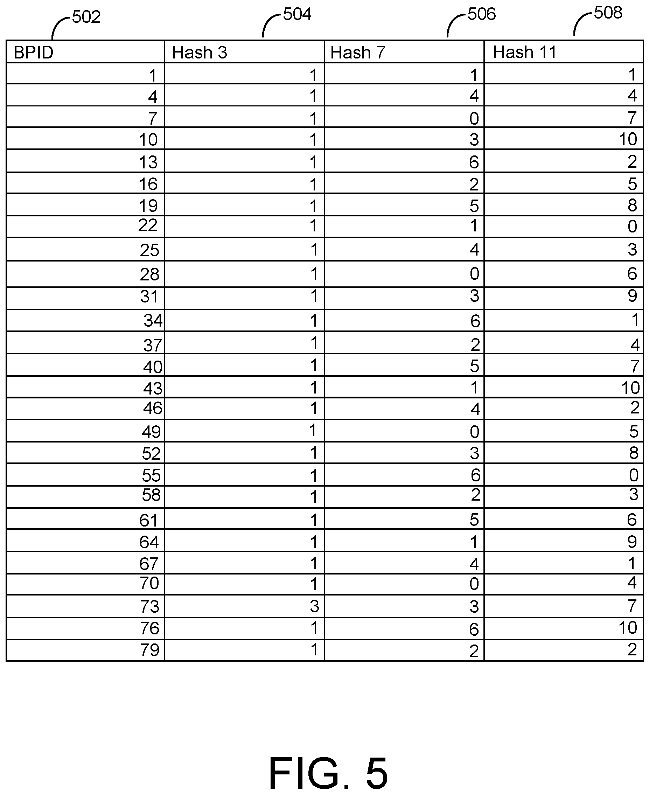

In particular, since the scoring model 146 is trained with the aggregated metric values in the hash bins, real-time data may be accumulated into the hash bins and scored against the trained scoring model(s). After the 21 hash bins are scored against their model, it is determined that Hash 3 bin 1 is abnormal, so that filtering the list of bufferpools using the object filter 152 of FIG. 1, the table of FIG. 5 is obtained.

In FIG. 5, column 502 includes only those remaining bufferpools for which hash bin values in column 504 equal either 1 or 3. Consequently, hash bin values in column 506 and column 508 correspond to the unique hash signatures and bufferpool identifiers of corresponding rows of the table of FIG. 4.

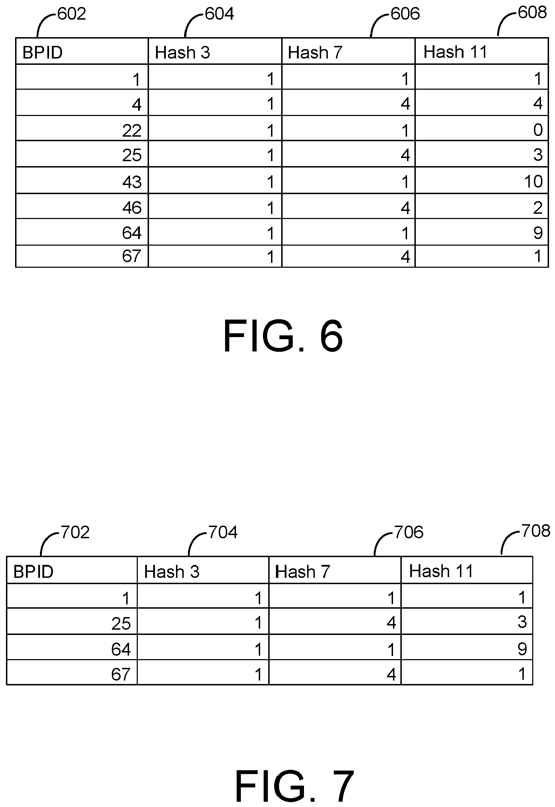

Similarly, it may then be determined that Hash-7 bin values 1 and 4 contain anomalous aggregated metric values. Consequently, FIG. 6 illustrates that column 602 includes only those remaining bufferpools for which hash bin values in column 604 equal either 1 or 3, and column 606 includes remaining bufferpools for which hash bin values equal either 1 or 4. In the example, as shown, no bufferpool IDs with Hash-3 values of 3 include Hash-7 values of 1 or 4, so that the column 604 includes only Hash-3 values of 1. Column 608 includes the various Hash-11 values corresponding to the remaining hash values of columns 604 and 606.

With respect to FIG. 7, it may then be determined that Hash-11 bin values 1, 3, and 9 are abnormal. As a result, column 702 includes only those remaining bufferpools for which hash bin values in column 704 equal 1, column 706 includes remaining bufferpools for which hash bin values equal either 1 or 4, and column 708 includes remaining bufferpools for which hash bin values equal either 1, 3, or 9.

As the above example shows, and as described above, hash triangulation techniques may be used to uniquely identify a single bufferpool, or to define a fuzzy logic set of objects. In the latter case, the fuzzy set may then be fed into the inference engine 154. For example, in scenarios in which bufferpools experience read/write operations based on underlying transactions and associated Structured Query Language (SQL) statements, analysis may be performed to narrow down and identify a problematic transaction and its associated SQL statement of an anomalous bufferpool.

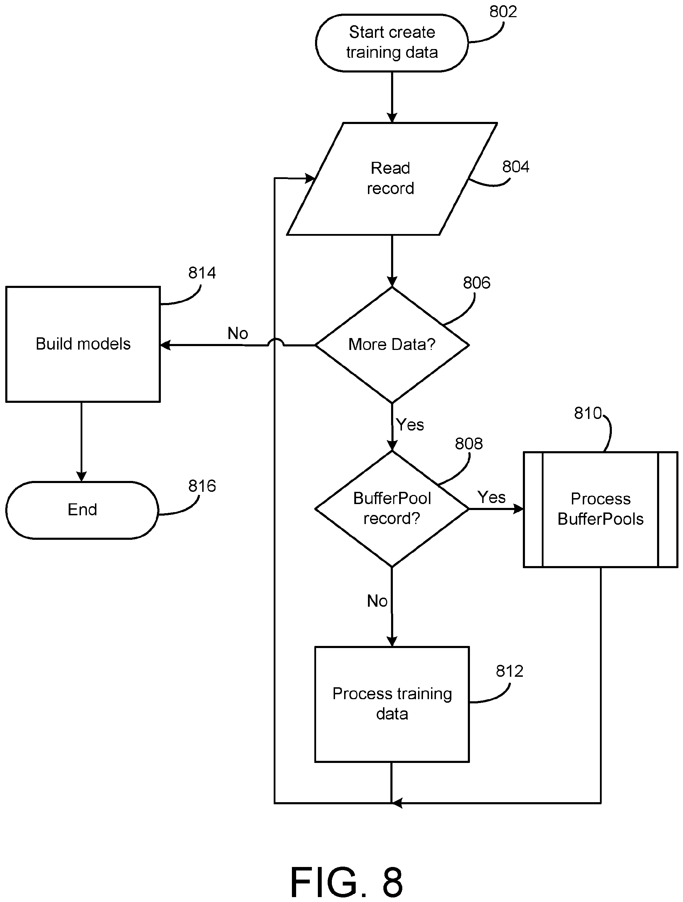

FIG. 8 is a flowchart illustrating an example model training process for use in the anomaly detection system of FIG. 1, as applied to the object hash signatures of FIGS. 4-7. In FIG. 8, a training process is initiated (802) and an initial record is read (804). Records may include bufferpool records along with many other types of data for which training is being performed.

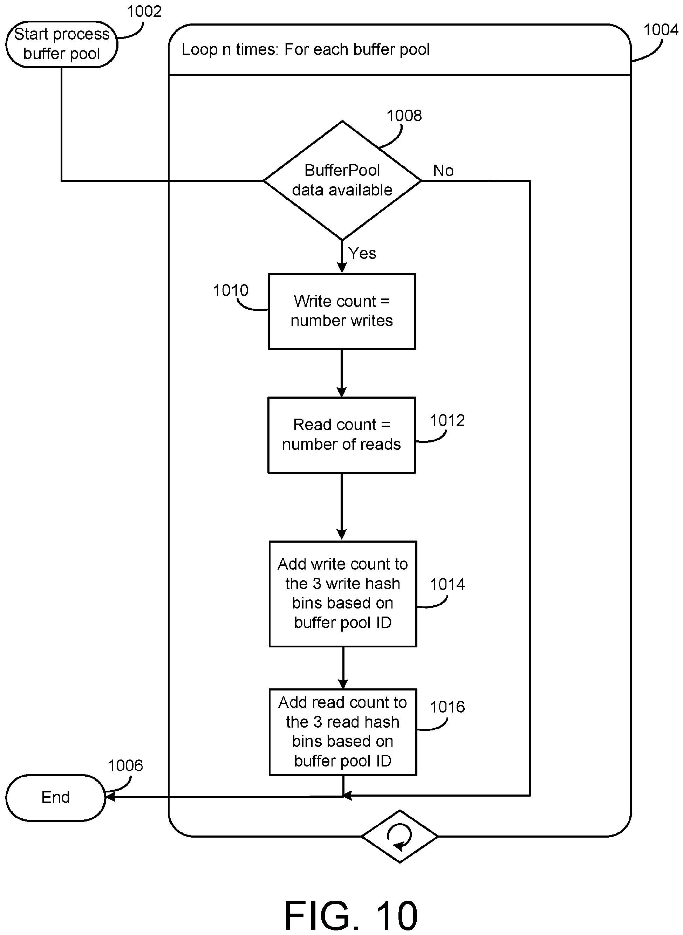

If more data exists (806), then the data may be identified as a bufferpool record or not (808). If the record is a bufferpool record, then associated processing may be performed (810), as described in more detail below, with respect to FIG. 10. Otherwise, non-bufferpool records may be processed in other, corresponding training contexts (812).

Once all bufferpool records have been read out (806), corresponding trained scoring models may be built (814). The process may then end (816).

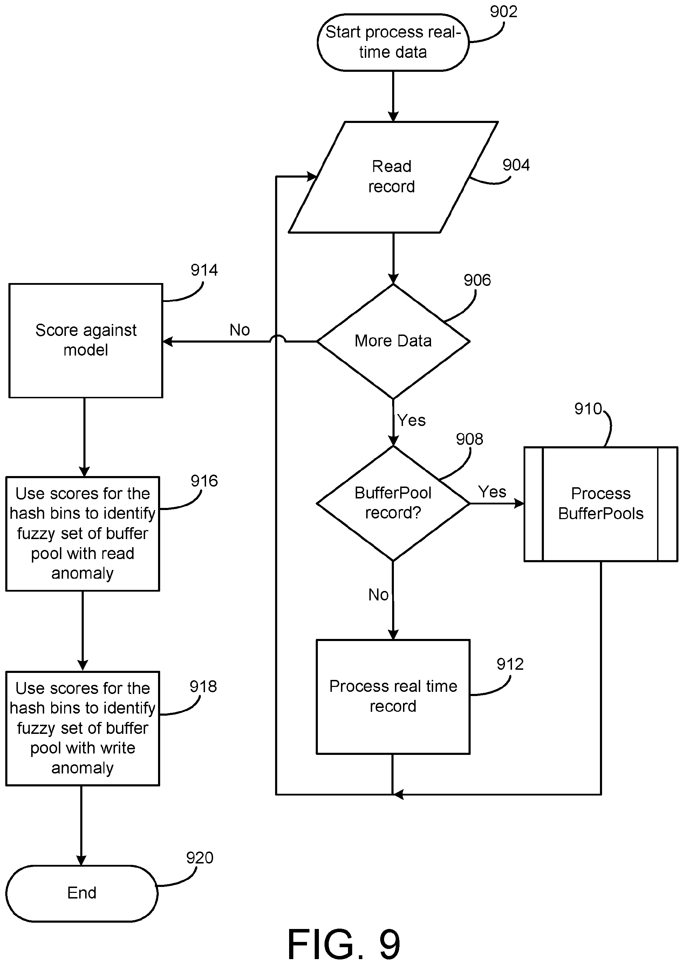

FIG. 9 is a flowchart illustrating an example model scoring process for use in the anomaly detector 118 system of FIG. 1, as applied to the object hash signatures of FIGS. 4-7.

FIG. 10 is a flowchart illustrating more detailed aspects of the example scoring model 146 process of FIG. 9. Similar to FIG. 8, but now in a scoring rather than training context, a scoring process is initiated with real-time data (902) and an initial record is read (904).

If more data exists (906), then the data may be identified as a bufferpool record or not (908). If the record is a bufferpool record, then associated processing may be performed (910), as described in more detail below, with respect to FIG. 10. Otherwise, non-bufferpool real time records may be processed (912) in other, corresponding scoring contexts.

Once all bufferpool records have been read out (906), corresponding scoring models may be used (914) from the training of FIG. 8. Hash bin scores may be used to identify a fuzzy set of bufferpools with a read anomaly (916), using the techniques described above with respect to FIGS. 4-7. Hash bin scores may be used to identify a fuzzy set of bufferpools with a write anomaly (918), using the techniques described above with respect to FIGS. 4-7. The process may then end (920).

FIG. 10 illustrates that bufferpool processing initiates (1002) a looped process (1004) that occurs n times for each bufferpool of n bufferpools. As shown, if bufferpool data is available (1008), then a write count is set equal to a number of writes in a relevant time interval (1010), and a read count is set equal to a number of reads in the relevant time interval (1012).

Once all counts have been updated, the write count may be added to three corresponding write count hash bins using the current bufferpool ID (1014). The read count may be added to three corresponding read count hash bins using the current bufferpool ID (1016). If bufferpool data is not available (1008) for a current bufferpool being processed, then the current bufferpool is ignored and the process loops (1004) to the next bufferpool. Once the looped process (1004) completes for all bufferpools, the process of FIG. 10 may end (1006).

As described herein, described techniques enable use of machine learning with multiple hashing algorithms for training, scoring, and identification of an unknown number of sequenced objects, and improve upon existing implementations that use the expensive route of training models using all possible combinations of objects than can be defined. Consequently, described techniques allow for the training, scoring, and identification of an unknown number of sequenced objects with, e.g., a greater than 90% reduction in overhead cost and an increase in accuracy of the object identification.

Implementations of the various techniques described herein may be implemented in digital electronic circuitry, or in computer hardware, firmware, software, or in combinations of them. Implementations may be implemented as a computer program product, i.e., a computer program tangibly embodied in an information carrier, e.g., in a machine readable storage device, for execution by, or to control the operation of, data processing apparatuses, e.g., a programmable processor, a computer, a server, multiple computers or servers, or other kind(s) of digital computer(s). A computer program, such as the computer program(s) described above, can be written in any form of programming language, including compiled or interpreted languages, and can be deployed in any form, including as a stand alone program or as a module, component, subroutine, or other unit suitable for use in a computing environment. A computer program can be deployed to be executed on one computer or on multiple computers at one site or distributed across multiple sites and interconnected by a communication network.

Method steps may be performed by one or more programmable processors executing a computer program to perform functions by operating on input data and generating output. Method steps also may be performed by, and an apparatus may be implemented as, special purpose logic circuitry, e.g., an FPGA (field programmable gate array) or an ASIC (application specific integrated circuit).

Processors suitable for the execution of a computer program include, by way of example, both general and special purpose microprocessors and any one or more processors of any kind of digital computer. Generally, a processor will receive instructions and data from a read only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto optical disks, or optical disks. Information carriers suitable for embodying computer program instructions and data include all forms of non volatile memory, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory may be supplemented by or incorporated in special purpose logic circuitry.

To provide for interaction with a user, implementations may be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Implementations may be implemented in a computing system that includes a back end component, e.g., as a data server, or that includes a middleware component, e.g., an application server, or that includes a front end component, e.g., a client computer having a graphical user interface or a Web browser through which a user can interact with an implementation, or any combination of such back end, middleware, or front end components. Components may be interconnected by any form or medium of digital data communication, e.g., a communication network. Examples of communication networks include a local area network (LAN) and a wide area network (WAN), e.g., the Internet.

While certain features of the described implementations have been illustrated as described herein, many modifications, substitutions, changes, and equivalents will now occur to those skilled in the art. It is, therefore, to be understood that the appended claims are intended to cover all such modifications and changes as fall within the scope of the embodiments.

## Claims

1. A computer-implemented method, the method comprising:
receiving metric values of monitored objects;
accessing a plurality of hash signatures that include a hash signature for each object of the monitored objects, each hash signature including a bin value of a first plurality of bin values producible by a first hashing algorithm and a bin value of a second plurality of bin values producible by a second hashing algorithm;
scoring aggregated metric values of each subset of the objects having a corresponding bin value of the first plurality of bin values and aggregated metric values of each subset of the objects having a corresponding bin value of the second plurality of bin values against at least one trained machine learning model to obtain a first plurality of scores and a second plurality of scores;
identifying, from the first plurality of scores, a first subset of the plurality of hash signatures and corresponding subset of the objects having at least one anomalous score;
identifying, from the second plurality of scores, a second subset of the plurality of hash signatures and corresponding subset of the objects having at least one anomalous score; and
identifying at least one object included in both the first subset and the second subset as an anomalous object.

2. The method of claim 1, wherein the hash signature includes a bin value of a third plurality of bin values producible by a third hashing algorithm.

3. The method of claim 2, further comprising:
scoring aggregated metric values of each subset of the objects having a corresponding bin value of the third plurality of bin values against the at least one trained machine learning model to obtain a third plurality of scores.

4. The method of claim 3, further comprising:
identifying, from the third plurality of scores, a third subset of the plurality of hash signatures and corresponding subset of the objects having at least one anomalous score; and
identifying the at least one object as being included in the first subset, the second subset, and the third subset.

5. The method of claim 1, further comprising:
hashing an object identifier of each object of the monitored objects using the first hashing algorithm and the second hashing algorithm to obtain the plurality of hash signatures.

6. The method of claim 1, further comprising:
aggregating, for each object, training metric values within a corresponding bin value of the first plurality of bin values, to obtain first aggregated training metric values;
aggregating, for each object, training metric values within a corresponding bin value of the second plurality of bin values, to obtain second aggregated metric values; and
training the at least one trained machine learning model using the first aggregated training metric values and the second aggregated training metric values.

7. A system comprising:
at least one memory including instructions; and at least one processor that is operably coupled to the at least one memory and that is arranged and configured to execute instructions that, when executed, cause the at least one processor to:
receive metric values of monitored objects;
access a plurality of hash signatures that include a hash signature for each object of the monitored objects, each hash signature including a bin value of a first plurality of bin values producible by a first hashing algorithm and a bin value of a second plurality of bin values producible by a second hashing algorithm;
score aggregated metric values of each subset of the objects having a corresponding bin value of the first plurality of bin values and aggregated metric values of each subset of the objects having a corresponding bin value of the second plurality of bin values against at least one trained machine learning model to obtain a first plurality of scores and a second plurality of scores;
identify, from the first plurality of scores, a first subset of the plurality of hash signatures and corresponding subset of the objects having at least one anomalous score;
identify, from the second plurality of scores, a second subset of the plurality of hash signatures and corresponding subset of the objects having at least one anomalous score; and
identify at least one object included in both the first subset and the second subset as an anomalous object.

8. The system of claim 7, wherein the hash signature includes a bin value of a third plurality of bin values producible by a third hashing algorithm.

9. The system of claim 8, wherein the instructions, when executed, are further configured to cause the at least one processor to:
score aggregated metric values of each subset of the objects having a corresponding bin value of the third plurality of bin values against the at least one trained machine learning model to obtain a third plurality of scores.

10. The system of claim 9, wherein the instructions, when executed, are further configured to cause the at least one processor to:
identify, from the third plurality of scores, a third subset of the plurality of hash signatures and corresponding subset of the objects having at least one anomalous score; and
identify the at least one object as being included in the first subset, the second subset, and the third subset.

11. The system of claim 7, wherein the instructions, when executed, are further configured to cause the at least one processor to:
aggregate, for each object, training metric values within a corresponding bin value of the first plurality of bin values, to obtain first aggregated training metric values;
aggregate, for each object, training metric values within a corresponding bin value of the second plurality of bin values, to obtain second aggregated metric values; and
train the at least one trained machine learning model using the first aggregated training metric values and the second aggregated training metric values.

12. A computer program product, the computer program product being tangibly embodied on a non-transitory computer-readable storage medium and comprising instructions that, when executed by at least one computing device, are configured to cause the at least one computing device to:
receive metric values of monitored objects;
access a plurality of hash signatures that include a hash signature for each object of the monitored objects, each hash signature including a bin value of a first plurality of bin values producible by a first hashing algorithm and a bin value of a second plurality of bin values producible by a second hashing algorithm;
score aggregated metric values of each subset of the objects having a corresponding bin value of the first plurality of bin values and aggregated metric values of each subset of the objects having a corresponding bin value of the second plurality of bin values against at least one trained machine learning model to obtain a first plurality of scores and a second plurality of scores;
identify, from the first plurality of scores, a first subset of the plurality of hash signatures and corresponding subset of the objects having at least one anomalous score;
identify, from the second plurality of scores, a second subset of the plurality of hash signatures and corresponding subset of the objects having at least one anomalous score; and
identify at least one object included in both the first subset and the second subset as an anomalous object.

13. The computer program product of claim 12, wherein the hash signature includes a bin value of a third plurality of bin values producible by a third hashing algorithm.

14. The computer program product of claim 13, wherein the instructions, when executed, are further configured to cause the at least one computing device to:
score aggregated metric values of each subset of the objects having a corresponding bin value of the third plurality of bin values against the at least one trained machine learning model to obtain a third plurality of scores.

15. Computer program product that - when loaded into a memory of a computer and being executed by at least one processor of the computer - causes the computer to perform the steps of the computer-implemented method according to any of claims 1 to 6.
